# NEW EUROPEAN PATENT SPECIFICATION

(11) **EP 1 661 935 B2**
(45) Date of publication and mention of the opposition decision: **30.05.2012**
(45) Mention of the grant of the patent: 12.12.2007
(21) Application number: 05010360.5
(22) Date of filing: 12.05.2005
(51) Int. Cl.: C08J 5/18, C08L 23/10, B29D 7/01, B29C 47/00

(54) **Transparent easy tearable film**
Transparente leicht reissbare Folie
Film transparent et facilement déchirable

(43) Date of publication of application: 31.05.2006
(73) Proprietor: Borealis Technology Oy, 06101 Porvoo (FI)
(72) Inventor: Christelle Grein, 4020 Linz (AT); Anton Wolfsberger, 4210 Gallneukirchen (AT); Peter Niedersüss, 4312 Ried/Riedmark (AT)
(74) Representative: Kador & Partner

(56) References cited:
- EP-A- 0 471 220
- EP-A- 0 863 183
- EP-A2- 0 518 121
- EP-A2- 0 885 926
- WO-A-2004/055101
- WO-A1-02/077092
- WO-A1-03/046021
- CA-A1- 2 005 537
- DE-A1- 4 329 292
- US-A1- 2001 039 314
- US-A1- 2002 156 194
- US-B1- 6 747 103
- US-B1- 7 569 276
- US-B2- 7 753 164
- MOORE E.P.: 'Polypropylene Handbook', 1996, JR. HANSER PUBLISHERS pages 149 - 159
- PASQUINI N.: 'Polypropylene Handbook 2nd ed', 2005, HANSER PUBLISHERS pages 414 - 417
- 'Encyclopedia of Polymer Science', vol. 11, 2004, WILEY INTERSCIENCE pages 11 - 12

## Description

The present invention relates to a cast film or blown film having a high transparency, easy tear features and low extractables. Furthermore, the invention is related to a process for making the films as well as to the use of a heterophasic propylene composition for cast films and blown films.

In the recent years there has been an increasing demand of heat-sealed pouches, in particular in the food industry, for example for rice or fodder for dogs and cats. A very well-known problem of such filled pouches is their opening. Often, the pouches can only be opened with a high effort at a predefined indentation (or perforation or notch) without using tools like knives and scissors. Another problem is that a manual opening does not lead to a straight crack in the pouches but to a curved one increasing the risk that the content of the pouches ooze out unintended. Hence, there is a demand to develop films for pouches which can be easily opened manually at the notch leading to a straight crack in the pouch. Described with physical parameters, it means that the tear energy has to be minimized and that the crack should develop straight in a pre-defined direction starting from the notch and usually in parallel direction to the upper side of the pouch. The materials used for such purpose have to be tough enough to resist impact loading at room or sub-ambient temperatures. Resins like polypropylene homopolymers and ethylene-propylene random copolymers which are brittle under severe loading are therefore excluded. Impact polypropylenes which are known for their high toughness are normally hazy and tend to develop plasticity when deformed, a property which limits the propagation of a linear crack through the pouch. Thus, they are no candidates of choice. Additionally the film shall fulfill certain standards issued by the food and drug administration (FDA), i.e. inter alia having low C₆-extractables. Certainly the transparency of the film should also be good as the market favors transparent pouches.

Therefore, it is the object of the present invention to provide a cast film or blown film having a high transparency, easy tear features and low extractables.

The finding of the present invention is to provide a cast film or a blown film comprising a composition of a polypropylene matrix and an ethylene-propylene rubber (EPR) whereby the particles of the ethylene-propylene rubber (EPR) in the matrix develop a high orientation in one direction when the film is casted or blown.

Hence, the present invention is related to a cast film or blown film comprising a composition comprising
a) 80 to 95 wt% of a polypropylene matrix (A) with an MFR₂ of 1 to 30 g/10 min being a homopolymer or a copolymer which has a comonomer content of less than 3 wt%;
b) 5 to 20 wt% of an ethylene-propylene rubber (EPR) (B) with at least 60 wt% propylene having an intrinsic viscosity (IV) of 1 to 2.5 dl/g; and
c) 0.0001 to 1 wt% of an alpha-nucleating agent (C).
wherein the film has a thickness of 5 to 200 µm.

Surprisingly, it had been found that such a cast film or blown film possesses a high transparency, low extractables and also very good tear features expressed in a low tear resistance, low tear whitening, low tear plasticity and a low tear angle.

### Definition of tear features

Tear resistance, tear whitening, tear plasticity and tear angle have been used to describe the easy-tear performance of the different materials. Tear resistance (W), also called tear energy in the following, is that energy needed to propagate a crack in a precut sample at room temperature according to ISO 6383-2. It is commonly known as Elmendorf test. Tear resistance was determined at room temperature on 75*63*0.1 mm or 75*63*0.05 mm samples with a precut slit of 20 mm according to ISO 6383-2. The force required to tear the specimen completely along its length was used to calculate the tear resistance.

Tear whitening (TW), tear plasticity (TP) and tear angle (TA) have been determined post mortem on the fractured samples used to assess the tear energy within 48 hours after having performed the Elmendorf test. Values provided in the following are valid for these fractured samples and correspond to about half of what would have been measured considering the whole samples (which consist of two broken halves).

The tear whitening corresponds to the degree of whitening of the area around the fracture surface. It has been determined with a ruler and rationalized with marks: 0 correspond to no tear whitening at all, 1 to a tear whitening < 0.3 mm, 2 to a tear whitening in between 0.3-0.5 mm (0.5 mm excluded), 3 to a tear whitening in between 0.5-1.0 mm (1.0 mm excluded), 4 to a tear whitening in between 1.0-2.0 mm (2.0 mm excluded), 5 to a tear whitening above 2.0 mm (2 mm included).

The tear plasticity corresponds to the size of the damaged area around the fracture surface. This damaged zone is often called plastic zone. Depending on the polymer composition it will or won't exhibit whitening. It has been determined with a ruler and rationalized with marks: 0 correspond to no plasticity at all, 1 to a localized damage near the crack which size is < 1 mm, 2 to a damage localized in a zone of 1-2 mm around the main crack (2 mm excluded), 3 to a damage localized in a zone of 2-5 mm around the main crack (5 mm excluded), 4 to a damage localized in a zone of 5-10 mm around the main crack (10 mm excluded), 5 to a damage localized in a zone of ≥ 10 mm around the main crack.

The tear angle corresponds to the deviation of the crack towards a straight propagation. It has been measured with a protractor.

All the above mentioned parameters have to be fulfilled to consider a material as easy tearable:
⇒ W_{MD} < 20 N/mm, the tear resistance in the machine direction;
⇒ W_{TD} /W_{MD} > 2, where W_{TD} is the tear resistance in the transverse direction;
⇒ TW ≤ 2 in both machine and transverse directions where TW is the tear whitening;
⇒ TP ≤ 2 in both machine and transverse directions where TP is the tear plasticity;
⇒ TA ≤ 2.5° in machine direction (TA_{MD}) and TA≤ 4.5° in transverse direction (TA_{TD}) where TA is the tear angle.

Usually the notch (precut) is made in the machine direction, since the energy needed to propagate the crack is there the lowest. However, if W_{TD} < 20 N/mm (preferably < 15 N/mm) and TA_{TD} < 2.5°, the transverse direction is also perfectly adapted as tear direction.

To achieve these very good tear features, it is in particular necessary that the ethylene-propylene rubber (EPR) particles are expanded in one direction, i.e. that they are oriented in the direction in which the crack develops. To achieve this aim, a composition is needed as defined above. Hence the synergistic effect of all features contributes to a deformation of the ethylene-propylene rubber (EPR) particles in the propylene matrix leading to the orientation effect, which is mainly responsible for the good tear features but has also a positive influence on the transparency and low extractable properties.

An important requirement in this context is the intrinsic viscosity of the ethylene-propylene rubber (EPR).

The intrinsic viscosity (IV) is a measure of the capability of a polymer in solution to enhance the viscosity of the solution. Intrinsic viscosity (IV) is correlated positively with the polymer molecular weight. The intrinsic viscosity (IV) is defined as the limiting value of the specific viscosity/concentration ratio at zero concentration. It thus becomes necessary to find the viscosity at different concentrations and then extrapolate to zero concentration. The variation of the viscosity number with concentration depends on the type of molecules as well as on the solvent. In general, the intrinsic viscosity of linear macromolecular substances is related to the molecular weight or degree of polymerization. With linear macromolecules, viscosity number measurements can provide a method for the rapid determination of molecular weight when the relationship between viscosity and molecular weight has been established.

The intrinsic viscosity (IV) in this application is measured according to DIN ISO 1628-1 (October 1999).

Accordingly, if the intrinsic viscosity (IV) of the ethylene-propylene rubber (EPR) is too high, i.e. higher than 2.5 dl/g, then the film will have a too high impact strength, which influences the tear resistance negatively, i.e. the tear energy is rather high. Moreover a high intrinsic viscosity (IV) is also correlated with rather big particles (with a diameter above 500 nm as observed on electron microscopy micrographs). Big particles, however, diminish the transparency of the film. On the other hand, if the intrinsic viscosity (IV) is too low, i.e. lower than 1.0 dl/g, then a production of the composition is rather difficult.

It is in particular preferred, that the intrinsic viscosity (IV) is not higher than 2.3 dl/g, more preferably not higher than 2.2 dl/g and most preferably not higher than 2.1 dl/g. In turn, the lower limit of the intrinsic viscosity (IV) is preferably not lower than 1.2 dl/g, more preferably not lower than 1.4 dl/g. Preferred ranges are 1.0 to 2.3 dl/g, more preferably 1.2 to 2.3 dl/g, still more preferably 1.2 to 2.2 dl/g and most preferably 1.2 to 2.1 dl/g.

Preferably, not only the intrinsic viscosity (IV) of the ethylene-propylene rubber (EPR) alone should be considered, but also the polypropylene matrix used. It should be in particular avoided that the ethylene-propylene rubber (EPR) has a similar intrinsic viscosity (IV) to the polypropylene matrix. A good elongation of the ethylene-propylene rubber (EPR) is especially achieved if the intrinsic viscosities of the ethylene-propylene rubber (EPR) particles and the polypropylene matrix differ to some extent. Therefore to further improve the orientation effect, it is preferred that the polypropylene matrix has a higher intrinsic viscosity (IV) than the ethylene-propylene rubber (EPR). This proportion of the polypropylene matrix and the ethylene-propylene rubber (EPR) to each other enables a specifically good elongation of the ethylene-propylene rubber particles in the polypropylene matrix. It has been, in particular, found out that it is especially preferred that the ratio of the intrinsic viscosity (IV) of the ethylene-propylene rubber (EPR) to the polypropylene matrix (IV_{EPR}/IVₘₐₜᵣᵢₓ) is not higher than 0.85, more preferably not higher than 0.8. Preferably, the polypropylene matrix has an intrinsic viscosity (IV) of 1.8 to 4.0 dl/g, more preferably of 2.0 to 3.5 dl/g.

As stated above the intrinsic viscosity (IV) is of particular relevance in this application, as it influences the orientation effect needed. On the other hand the intrinsic viscosity (IV) is an indicator of the molecular weight. A high intrinsic viscosity (IV) results from a high molecular weight. Another way to express the molecular weight of a polymer is by way of its melt flow rate (MFR). The melt flow rate mainly depends on the average molecular weight. This is due to the fact that long molecules render the material a lower flow-tendency than short molecules. An increase in molecular weight means a decrease in the MFR-value. The melt flow rate (MFR) is measured in g/10 min of the polymer discharged through a defined dye under specified temperature and pressure conditions and the measure of viscosity of the polymer which, in turn, for each type of polymer is mainly influenced by its molecular weight but also by its degree of branching. The melt flow rate measured under a load of 2.16 kg (ISO 1133) is denoted as MFR₂. Hence as both measuring methods are interlinked by the molecular weight of the polymer, also the melt flow rate (MFR) has to be carefully considered.

Therefore it is required, that the polypropylene matrix shall have a specific melt flow rate (MFR). If the melt flow rate MFR₂ is too low (high molecular weight polymer matrix), i.e. lower than 1 g/10min, then, the easy tear features are far from target due to the high ductility of the matrix which promotes plastic deformation. Hence, the polypropylene matrix shall have an MFR₂ of not lower than 1 g/10min, more preferably not lower than 1.5 g/10min. On the other hand, if the MFR₂ is too high, i.e. higher than 30 g/10min, then the polypropylene matrix has inferior transparency and can not easily been processed. Moreover a too high melt flow rate (MFR₂) of the polypropylene matrix boosts the particle size of the ethylene-propylene rubber (EPR) which is also detrimental for the orientation effect as well as for the transparency of the film. It is in particular preferred, that the MFR₂ of the polypropylene matrix is not higher than 20 g/10 min, more preferably not higher than 10 g/10min.

In addition it is preferred, that the composition has a MFR₂ of at least 1.5 g/10 min, more preferably of at least 2 g/10min.

The type of polypropylene matrix is not restricted to a specific one, as long as the matrix fulfills the above mentioned requirements. Hence, each homopolymer or copolymer can be used. In case a copolymer is used, the comonomer content, however, shall be less than 3 wt%, otherwise the film gets too ductile affecting negatively the easy tear features. Preferably, the comonomer is ethylene.

The choice of ethylene-propylene rubber (EPR) must conform with the orientation requirement and the transparency targeted. Hence an ethylene-propylene rubber (EPR) is needed having a high propylene amount, i.e. a propylene amount of at least 60 wt% in the rubber.

Moreover to achieve good tear features the weight ratio of the polypropylene matrix and the ethylene-propylene rubber (EPR) must be kept in a specific range. Accordingly, the composition does not have more than 20 wt% of the ethylene-propylene rubber (EPR), otherwise the film will be too soft and a linear crack cannot be guaranteed anymore. Therefore the amount of polypropylene matrix must range from 80 to 95 wt%, preferably in the range of 82 to 93 wt%. In turn, the ethylene-propylene rubber (EPR) must be in the range of 5 to 20 wt%, preferably in the range of 7 to 18 wt%.

To achieve the desired properties of the present invention, it has been further found out, that also the film must have a high cristallinity. A highly structured (crystal) polymer has improved optical and mechanical properties, i.e. a good tear performance expressed by a low tear energy.

Therefore the composition employed must comprise an alpha-nucleating agent in the amount of 0.0001 to 1 wt%, preferably in the amount of 0.001 to 0.5 wt%.

Alpha-nucleating agents of polypropylene are substances with the ability to act as substrates for crystal formation by epitaxy thus increasing the number of nuclei of the system. Thereby the nucleating agents improve the crystallization behavior in processing, i.e. decreasing the cycle time or increasing the line speed, increase the crystallinity in the final product and, additionally, improve the optical and mechanical properties in terms of improved stiffness and here of lower tear energy.

Any suitable alpha-nucleating agent known in the art can be used. However, it is preferred to use at least one alpha-nucleating agent selected from the group consisting of sodium benzoate, 1,3:2,4-bis-(3,4-dimethyl-benzylidene)-sorbitol, sodium-2,2'-methylenebis-(4,6-di-tert-butyl-phenyl)-phosphate and hydroxybis-(2,4,8,10-tetra-tert-butyl-6-hydroxy-12h-dibenzo-(d,g)(1,3,2)-dioxaphosphocin-6-oxidato)-aluminium. A further α-nucleation method, herein referred to as "BNT", is a special reactor technique, where the catalyst is prepolymerised with monomers like vinylcyclohexane (VCH). This method is described in greater detail in e.g. EP 0 316 187 A2. For the purpose of this invention "BNT" is referred to as α-nucleating agent.

Preferably, the thickness of the film should not be too high since otherwise a significant loss in transparency will be the effect. Therefore, the film has a thickness of 5 to 200 µm, more preferably of 10 to 150 µm.

Preferably, the film shall have only few C₆-extractables measured according to FDA-HHS 177.1520 where 2.5g of the sample are extracted at 50°C with 1 1 hexane in a Soxhlet apparatus for 24 h. It is in particular preferred that the amount of C₆-extractables shall be equal or lower than 2.6 wt%, more preferably equal or lower than 2.4 wt%.

It is in particular preferred that the film of the present invention has a tear resistance in machine direction (W_{MD}) determined by ISO 6383-2 of lower than 20 N/mm, more preferably of lower than 15 N/mm, most preferably of lower than 12.5 N/mm when measured on 100 µm thick films.

More preferably, the inventive film has a W_{TD}/W_{MD}-ratio of more than 2, more preferably of more than 2.3, whereby W_{TD} is the tear-resistance of the film in a transverse direction determined by ISO 6383-2 when measured on 100 µm thick films.

In addition, it is preferred that the film has a tear-angle (TA) in machine direction of equal or less than 2.5°, more preferably equal or less than 2.2°, most preferably equal or less than 2.0° when measured on 100 µm thick samples after having performed a test according to ISO 6383-2. Moreover, it is preferred that the film has tear angle (TA) in transverse direction of less than 4.5°, more preferably less than 4.0° when measured on 100 µm thick samples after having performed a test according to ISO 6383-2.

Further, it is preferred that the film has a haze of lower than 21 %, more preferably lower than 18%, most preferably lower than 15%, determined according to ASTM D 1003-92 when measured on 100 µm thick films.

Preferably, the film has a gloss of better than 42%, more preferably better than 48%, most preferably better than 52%, determined according to ISO 2813 when measured on 100 µm thick films.

Moreover, the present invention comprises the use of the composition as defined above for producing a cast film or blown film. In particular, it is preferred that the composition and the cast film or blown film as defined above is used for producing a pouch.

Furthermore, the present invention is related to a process for producing a cast film as defined above comprising the steps of
(i) pouring or spreading a solution, hot melt or dispersion of a material onto a temporary carrier,
(ii) hardening the material, and
(iii) stripping the hardened film from the surface of the carrier, whereby the material is a composition as described above, in particular a composition comprising
   a. 80 to 95 wt% of a polypropylene matrix with an MFR₂ of 1 to 30 g/10min being a homopolymer or a copolymer, which has a comonomer content of less than 3 wt%;
   b. 5 to 20 wt% of an ethylene-propylene-rubber (EPR) with at least 60 wt% propylene having an intrinsic viscosity (IV) of 1 to 2.5 dl/g; and
   c. 0.0001 to 1 wt% of an α-nucleating agent.

Further, the present invention is related to a process for producing a blown film as described above thereby comprising the steps of
(i) blowing up a tube of molten material with air perpendicularly to the upwards direction from a side-fed blown film die;
(ii) cooling it down with air from the outside on a cooling ring;
(iii) folding it and guiding it over deflector rolls onto the winder
   wherein the material is a composition as defined above, in particular a composition comprising
   a) 80 to 95 wt% of a polypropylene matrix with an MFR₂ of 1 to 30 g/10 min being a homopolymer or a copolymer, which has a comonomer content of less than 3 wt%;
   b) 5 to 20 wt% of ethylene-propylene rubber (EPR) with at least 60 wt% propylene having an intrinsic viscosity (IV) of 1 to 2.5 dl/g; and
   c) 0.0001 to 1 wt% of an alpha-nucleating agent.

The propylene polymer blends of the present invention are preferably produced by combining the propylene polymer **A** in the form of powder or granules, the elastomeric copolymer **B,** and the α-nucleating agent **C** in a melt mixing device.

Melt mixing devices suited for this process are discontinuous and continuous kneaders, twin screw extruders and single screw extruders with special mixing sections and co-kneaders. The residence time must be chosen such that a sufficiently high degree of homogenisation is achieved.

### Production of polypropylene matrix A

The propylene polymer may be produced by single- or multistage process polymerisation of propylene or propylene and α-olefin and/or ethylene such as bulk polymerisation, gas phase polymerisation, slurry polymerisation, solution polymerisation or combinations thereof using conventional catalysts. A homo- or copolymer can be made either in loop reactors or in a combination of loop and gas phase reactor. Those processes are well known to one skilled in the art.

A suitable catalyst for the polymerisation of the propylene polymer is any stereospecific catalyst for propylene polymerisation which is capable of polymerising and copolymerising propylene and comonomers at a temperature of 40 to 110°C and at a pressure from 10 to 100 bar. Ziegler Natta catalysts as well as metallocene catalysts are suitable catalysts.

One skilled in the art is aware of the various possibilities to produce propylene homo- and copolymers and will simply find out a suitable procedure to produce suitable polymers which are used in the present invention.

### Production of ethylene-propylene rubber

An ethylene-propylene-rubber (B) may be produced by known polymerisation processes such as solution, suspension and gas-phase polymerisation using conventional catalysts. Ziegler Natta catalysts as well as metallocene catalysts are suitable catalysts.

A widely used process is the solution polymerisation. Ethylene, propylene and catalyst systems are polymerised in an excess of hydrocarbon solvent. Stabilisers and oils, if used, are added directly after polymerisation. The solvent and unreacted monomers are then flashed off with hot water or steam, or with mechanical devolatilisation. The polymer, which is in crumb form, is dried with dewatering in screens, mechanical presses or drying ovens. The crumb is formed into wrapped bales or extruded into pellets.

The suspension polymerisation process is a modification of bulk polymerisation. The monomers and catalyst system are injected into the reactor filled with propylene. The polymerisation takes place immediately, forming crumbs of polymer that are not soluble in the propylene. Flashing off the propylene and comonomer completes the polymerisation process.

The gas-phase polymerisation technology consists of one or more vertical fluidised beds. Monomers and nitrogen in gas form along with catalyst are fed to the reactor and solid product is removed periodically. Heat of reaction is removed through the use of the circulating gas that also serves to fluidise the polymer bed. Solvents are not used, thereby eliminating the need for solvent stripping, washing and drying.

The production of ethylene propylene rubber (B) is also described in detail in e.g. US 3,300,459, US 5,919,877, EP 0 060 090 A1 and in a company publication by EniChem "DUTRAL, Ethylene-Propylene Elastomers" , pages 1-4 (1991).

Alternatively, ethylene-propylene rubber (B), which are commercially available and which fulfil the indicated requirements, can be used.

Alternatively, polymers A and B may be produced in a series of reactors, i.e. starting with the production of polymer A in a loop reactor and transferring the product into a gas phase reactor, where copolymer B is polymerised.

### Description of measurement methods

### MFR

The melt flow rates were measured under a load of 2.16 kg at 230°C. The melt flow rate is that quantity of polymer in grams which the test apparatus standardized to ISO 1133 extrudes within 10 minutes at a temperature of 230°C under a load of 2.16 kg.

### Intrinsic Viscosity

Intrinsic viscosity was measured according to DIN ISO 1628-1 (October 1999) in Decalin at 135°C.

### Gloss

Gloss was determined according to ISO 2813 on 100 µm thick films at an angle of 20°.

### Haze

Haze was determined according to ASTM D 1003-92 on 50 and 100 µm thick films. **C₆-solubles**

C₆-solubles were determined according to FDA-HHS 177.1520 where 2.5 g of the sample are extracted at 50°C with 11 n-hexane in a Soxhlet apparatus for 24h.

### Tear Resistance

Tear resistance was determined at room temperature on 75*63*0.1 mm or 75*63*0.05 mm samples with a precut slit of 20 mm according to ISO 6383-2 (Elmendorf test). The force required to tear the specimen completely along its length was used to calculate the tear resistance.

### Tear whitening

Tear whitening was determined on the fractured samples used to measure the tear resistance according to an internal Borealis method. It has been assessed with a ruler and rationalized with marks: 0 corresponds to no tear whitening at all, 1 to a tear whitening < 0.3 mm, 2 to a tear whitening in between 0.3-0.5 mm (0.5 mm excluded), 3 to a tear whitening in between 0.5-1.0 mm (1.0 mm excluded), 4 to a tear whitening in between 1.0-2.0 mm (2.0 mm excluded), 5 to a tear whitening above 2.0 mm (2 mm included).

### Tear Plasticity

Tear plasticity was determined on the fractured samples used to measure the tear resistance according to an internal Borealis method. It has been assessed with a ruler and rationalized with marks: 0 correspond to no plasticity at all, 1 to a localized damage near the crack which size is < 1 mm, 2 to a damage localized in a zone of 1-2 mm around the main crack (2 mm excluded), 3 to a damage localized in a zone of 2-5 mm around the main crack (5 mm excluded), 4 to a damage localized in a zone of 5-10 mm around the main crack (10 mm excluded), 5 to a damage localized in a zone of≥ 10 mm around the main crack

### Tear Angle

Tear angle was determined on the fractured samples used to measure the tear resistance according to an internal Borealis method. It corresponds to the deviation of the crack towards a straight propagation. It has been measured with a protractor.

### Dart Drop Impact

Dart Drop Impact (DDI) was determined according to ISO 7765-1 at room temperature. The energy (here expressed in form of weight in g) that causes films to fail under specified conditions of impact of a free-falling dart from a height of 660 mm that would result in 50% failure of the specimen is determined (F₅₀). 20 specimens were tested for each weight.

### Production of films

Cast films were produced:
A) on a single screw extruder with a barrel diameter of 30 mm and a slot die of 200 x 0.5 mm in combination with a chill- and a take up-roll. Melt temperature was 260 °C in the die; the chill-roll was kept at 15 °C and the take-up roll at 15 °C. The film thickness was adjusted through the ratio between extruder output (4,5 kg/h) and takeoff speed (10,5 m/min),
B) on a single screw extruder with a barrel diameter of 60 mm and a slot die of 800 x 0.9 mm in combination with a chill- and a take up-roll. Melt temperature was 250 °C in the die; the chill-roll was kept at 30 °C and the take-up roll at 22 °C. A film thickness of 50 µm was adjusted through the ratio between extruder output (60 kg/h) and takeoff speed (30 m/min).

Blown films were produced on a single screw extruder with a barrel diameter of 60 mm and a tubular die of 200 mm diameter x 1.2 mm die gap. Melt temperature was 190 °C in the die; the cooling air was kept at 15°C internal and external of the film bubble. A film thickness of 50 µm was adjusted through the ratio between extruder output (60 kg/h), blow up ratio (2:1) takeoff speed (20 m/min).

### Examples

### Preparation of polymers A

The propylene polymers **A1-A4 and A6** used for the present invention were prepared according to the following procedure:
Raw Materials:
   Hexane dried over molecular sieve (3/10A)
   TEAL: 93 % from Sigma-Aldrich
   Donor: Dicyclopentyldimethoxysilane: ex Wacker Chemie (99%).
   N₂: supplier AGA, quality 5.0; purification with catalyst BASF R0311, catalyst G132 (CuO/ZNO/C), molecular sieves (3/10A) and P₂O₅.
   Propylene: polymerisation grade
   Hydrogen: supplier AGA, quality 6.0

The catalyst ZN104 is commercially available from Basell.

Sandostab P-EPQ is commercially available from Clariant.

A 5 1 autoclave reactor has been purified by mechanical cleaning, washing with hexane and heating under vacuum/N₂ cycles at 160 °C. After testing for leaks with 30 bar N₂ over night reactor has been vacuumed and filled with 1110 g propylene by weighing and 8 nl H₂ by pressure monitoring from a 501 steel cylinder.

10 mg of ZN104-catalyst are activated for 10 minutes with a mixture of Triethylaluminium (TEA1; solution in hexane 1mol/l) and Dicyclopentyldimethoxysilane as donor (0.3 mol/l in hexane) - in a molar ratio of 5 after a contact time of 5 min - and 10 ml hexane in a catalyst feeder. The molar ratio of TEA1 and Ti of catalyst is 250. After activation the catalyst is spilled with 300 g propylene into the stirred reactor with a temperature of 23 °C. Stirring speed is hold at 250 rpm. After 6 min prepolymerisation at 23 °C temperature is increased to 70 °C in about 14 min. After holding that temperature for 1 hour polymerisation is stopped by flashing propylene and cooling to room temperature.

After spilling the reactor with N₂ the homopolymer powder is transferred to a steel container and stabilized with 0.1 wt% of Sandostab P-EPQ and 0.2 wt% of Ionol in acetone and dried over night in a hood and additionally for 2 hours at 50 °C under vacuum.

The amount of polymer powder (A3) was 113 g and the MFR (230 °C, 2.16 kg) of the powder was 5 g/10 min.

### Procedure for random copolymer

The propylene copolymer **A5** used for the present invention was prepared according to the following procedure:
Raw Materials:
   Hexane dried over molecular sieve (3/10A)
   TEAL: 93 % from Sigma-Aldrich
   Donor: Dicyclopentyldimethoxysilane: ex Wacker Chemie (99%).
   N₂: supplier AGA, quality 5.0; purification with catalyst BASF R0311, catalyst G132 (CuO/ZNO/C), molecular sieves (3/10A) and P₂O₅.
   Propylene: polymerisation grade
   Ethylene: polymerisation grade
   Hydrogen: supplier AGA, quality 6.0

Sandostab P-EPQ is commercially available from Clariant.

A 5 1 autoclave reactor has been purified by mechanical cleaning, washing with hexane and heating under vacuum/N₂ cycles at 160 °C. After testing for leaks with 30 bar N₂ over night reactor has been vacuumed and filled with 1110 g propylene by weighing and 5 nl H₂ by pressure monitoring from a 501 steel cylinder.

8 mg of ZN104-catalyst are activated for 10 minutes with a mixture of Triethylaluminium (TEA1; solution in hexane 1mol/l) and Dicyclopentyldimethoxysilane as donor (0.3 mol/l in hexane) - in a molar ratio of 25 after a contact time of 5 min - and 10 ml hexane in a catalyst feeder. The molar ratio of TEA1 and Ti of catalyst is 250. After activation the catalyst is spilled with 300 g propylene into the stirred reactor with a temperature of 23 °C. Stirring speed is hold at 350 rpm. After 6 min prepolymerisation at 23 °C temperature is increased to 70 °C in about 14 min. While heating the ethylene flow has been raised continuously up to the final flow of 340 ml/min during the prepolymerisation. After holding a polymerisation temperature of 70°C for 60 min at constant temperature, constant ethylene flow and constant stirrer rotation polymerisation is stopped by stopping the ethylene flow, by flashing propylene and cooling down the reactor to room temperature.

After spilling the reactor with N₂ the homopolymer powder is transferred to a steel container and stabilized with 0.1 wt% of Sandostab P-EPQ and 0.2 wt% of Ionol in acetone and dried over night in a hood and additionally for 2 hours at 50 °C under vacuum.

The amount of polymer powder **(A5)** was 98 g, the MFR (230 °C, 2.16 kg) of the powder was 3 g/10 min and its C2-content was 4.5 wt%.

The following homopolymers and random copolymers were prepared analogously according to the above procedure (Table 1):

**Table 1. Characteristics of homopolymers and random copolymers.**

| | MFR | C2-content |
|---|---|---|
| | [g/10min] | [wt%] |
| A1 | 3 | 0 |
| A2 | 1,5 | 0 |
| A3 | 5 | 0 |
| A4 | 10 | 0 |
| A5 | 3 | 4.5 |
| A6 | 2.5 | 0 |

### Preparation of ethylene-propylene rubber (B)

The elastomeric copolymers of the present invention were prepared according to the following procedure:
A 51-reactor (autoclave) filled with about 0.2 barg propylene (polymerisation grade) is pressured up with the required amount of H₂ in order to achieve the targeted intrinsic viscosity of the elastomeric copolymer. Then 300 g of propylene are added.

5 mg of a ZN101 (supplied by Basell) catalyst is contacted with 0.3 ml white oil for about 16 hours and then activated for 5 minutes with a mixture of Triethylaluminium (TEA1; solution in hexane 1 mol/l) and an alkoxysilane (Dicyclopentyldimethoxysilan in the examples) as donor (0.3 mol/l in hexane) - in a molar ratio of 76 using a contact time of 5 min. The molar ratio of TEA1 and Ti of catalyst was 380 and TEA1 concentration in TEA1/donor mixture 12.6 mg/ml hexane. After activation the catalyst is transferred to the reactor by spilling in with 500 g propylene. After 12 min pre-polymerisation at 30 °C a specified amount of ethylene is added to the reactor and the temperature is increased to the target polymerisation temperature (55 °C in the examples). During heating up additional ethylene dosing is started to achieve the target total pressure at the target polymerisation temperature. Total pressure is hold constantly via continuously dosing of ethylene during polymerisation. 30 min after end of prepolymerisation the reaction is stopped by flashing of monomers and cooling.

The polymer is stabilized with 0.1 wt% of Sandostab P-EPQ and 0.2 wt% of Ionol in acetone and dried over night in a hood and additionally for 2 hours at 50 °C under vacuum.

Some example of polymerisation are provided in Table 2

**Table 2. Polymerisation characteristics of ethylene-propylene rubbers.**

| Polymer No. | H2 | C2 | total pressure | IV | C3 |
|---|---|---|---|---|---|
| | barg | g | [barg] | [dl/g] | [wt %] |
| B1 | 3,7 | 60 | 30 | 1,8 | 71 |
| B2 | 2,8 | 60 | 31 | 2,3 | 60 |
| B4 | 1,6 | 50 | 30 | 3,2 | 56 |
| B5 | 1,76 | 50 | 30 | 3,0 | 57 |

The following elastomeric ethylene-propylene copolymers were prepared according to the above procedure(s), except that H₂ and ethylene amounts were varied to achieve different intrinsic viscosities and comonomer concentrations. They are reported in Table 3.

**Table 3. Characteristics of ethylene-propylene rubbers.**

| | IV | C3 |
|---|---|---|
| | [dl/g] | [wt%] |
| B1 | 1,8 | 71 |
| B2 | 2,3 | 60 |
| B3 | 2,6 | 62 |
| B4 | 3,2 | 56 |
| B5 | 3 | 57 |
| B6 | 1,3 | 65 |
| B7 | 2,05 | 76 |
| B8 | 1,95 | 62.5 |
| B9 | 2,1 | 53 |
| B10 | 2,0 | 43 |

The amounts of each component and the results of the measurements are shown in Tables 4 and 5. Tests were performed on 100 µm thick cast films obtained according to method A.

**Table 4. Polymer composition.**

| | **Total** | **Component A** | | **Component B** | | **Nucleation** |
|---|---|---|---|---|---|---|
| | **MFR** | **Type** | **Content** | **Type** | **Content** | |
| | [g/10min] | | [wt%] | | [wt%] | |
| E1 | 3,5 | A1 | 86,4 | B1 | 13,6 | Y |
| CE1 | 1,2 | A2 | 87,5 | B2 | 12,5 | N |
| CE2 | 3,5 | A3 | 87 | B3 | 13 | Y |
| CE3 | 3 | A4 | 82 | B4 | 18 | Y |
| CE4 | 0,8 | A2 | 84,5 | B5 | 15,5 | Y |
| CE5 | 3,5 | A5 | 89 | B6 | 11 | Y |
| E2 | 3,4 | A1 | 89,1 | B1 | 10,9 | Y |
| E3 | 3,2 | A1 | 91,8 | B1 | 8,2 | Y |
| E4 | 3,1 | A1 | 94,6 | B1 | 5,4 | Y |
| CE6 | 3,5 | A3 | 89,6 | B3 | 10,4 | Y |
| CE7 | 3,4 | A3 | 92,2 | B3 | 7,8 | Y |
| CE8 | 3,2 | A3 | 94,8 | B3 | 5,2 | Y |
| E5 | 2,5 | A6 | 88,2 | B7 | 11,8 | Y |
| E6 | 2,5 | A6 | 87,4 | B8 | 12,6 | Y |
| CE9 | 2,5 | A6 | 86,6 | B9 | 13,4 | Y |
| CE10 | 2,5 | A6 | 88,6 | B10 | 11,4 | Y |
| CE11 | 2,5 | A6 | 88,2 | B7 | 11,8 | N |
| CE12 | 2,5 | A6 | 87,4 | B8 | 12,6 | N |
| CE13 | 2,5 | A6 | 86,6 | B9 | 13,4 | N |
| CE14 | 2,5 | A6 | 88,6 | B10 | 11,4 | N |

**Table 5. Performance of the different polymers. Results have been obtained on 100 µm thick cast films produced according to method A.**

| | ***Elmendorf*** | | | | | | | | | ***Optical performance*** | | ***FDA*** |
|---|---|---|---|---|---|---|---|---|---|---|---|---|
| | ***Machine direction*** | | | | ***Transverse direction*** | | | | | | | |
| | **W_{MD}** | **TA_{MD}** | **TW_{MD}** | **TP_{MD}** | **W_{TD}** | **TA_{TD}** | **TW_{TD}** | **TP_{TD}** | **W_{TD}/W_{M}** | **Gloss20^{c}** | **Haze** | **C6-solubles** |
| | [N/mm] | [°] | [-] | [-] | [N/mm] | [°] | [-] | [-] | [-] | [%] | [%] | [wt%] |
| E1 | 12,2 | 1,0 | 1 | 0 | 29,4 | 1,2 | 0 | 0 | 2,4 | 54,7 | 12,3 | 2,0 |
| CE1 | 45,5 | 2,7 | 0 | 2 | 195,2 | 14,2 | 0 | 5 | 4,3 | 28 | 25,7 | 1,7 |
| CE2 | 14,1 | 1,6 | 2 | 0 | 28,2 | 1,6 | 3 | 1 | 2,0 | 3,7 | 74,2 | 1,9 |
| CE3 | 30,8 | 2,0 | 4 | 3 | 58,9 | 4,9 | 5 | 4 | 1,9 | 3,3 | 75,5 | 1,2 |
| CE4 | 37,3 | 1,0 | 0 | 2 | 173,6 | 15,0 | 0 | 5 | 4,7 | 31,1 | 34 | 1,2 |
| CE5 | 111,7 | 3,4 | 0 | 3,5 | 177,8 | 6,5 | 0 | 5 | 1,6 | 59,2 | 6,8 | 3,8 |
| E2 | 10,7 | 0,8 | 1 | 0 | 26,3 | 0,4 | 0,5 | 0 | 2,5 | 54,5 | 12,2 | na |
| E3 | 9,5 | 0 | 1 | 0 | 21,8 | 0,7 | 0,5 | 0 | 2,3 | 54,3 | 12,4 | na |
| E4 | 8,1 | 0 | 0 | 0 | 20 | 0,6 | 0 | 0 | 2,5 | 55,5 | 12,5 | na |
| CE6 | 13,9 | 1 | 2 | 1 | 21,5 | 1,2 | 3 | 1 | 1,5 | 8,3 | 68 | na |
| CE7 | 12,2 | 1,3 | 2 | 1 | 18,6 | 1 | 2 | 1 | 1,5 | 16 | 58,2 | na |
| CE8 | 8,6 | 1,5 | 0 | 1 | 16,7 | 1,1 | 1 | 1 | 1,9 | 30,3 | 44,7 | na |
| E5 | 16,2 | 1,6 | 1 | 1 | 38,5 | 4,2 | 1 | 1 | 2,4 | 58,1 | 11,2 | 1,8 |
| E6 | 19,9 | 1,6 | 1 | 1 | 43,1 | 3,8 | 1 | 2 | 2,2 | 57,9 | 12,1 | 1,6 |
| CE9 | 57,5 | 2,5 | 3 | 4 | 34 | 3,7 | 3 | 2 | 0,6 | 57,2 | 14,1 | 1,5 |
| CE10 | 80,7 | 3 | 3 | 5 | 41,9 | 4 | 3 | 2 | 0,5 | 54,5 | 9 | 1,4 |
| CE11 | 40,3 | 3,2 | 0 | 2 | 107,9 | 2,7 | 0 | 3 | 2,7 | 51,5 | 16,6 | 1,8 |
| CE12 | 38,3 | 2,8 | 0 | 3 | 100,5 | 3,5 | 0 | 3 | 2,6 | 50 | 16,9 | 1,6 |
| CE13 | 57,5 | 2,6 | 0 | 5 | 74,2 | 5,8 | 0 | 4 | 1,3 | 48,6 | 18 | 1,5 |
| CE14 | 75,5 | 2,8 | 1 | 5 | 51,9 | 4,6 | 1 | 4 | 0,7 | 55,9 | 17,7 | 1,4 |

In addition, cast and blown films of 50 µm thickness of E1 an CE1 were tested to assess the difference of the different technologies. Results are listed in Table 6.

A remarkable DDI performance for blown films can be seen with E1.

| | | | **E1** | | | **CE1** | | |
|---|---|---|---|---|---|---|---|---|
| | | | **cast film A** | **cast film B** | **blown film** | **cast film A** | **cast film B** | **blown film** |
| **Elmendorf** | **W_{MD}** | [N/mm] | 19,2 | 5,9 | 3,7 | 45,4 | 23,5 | 4,0 |
| | **W_{TD}** | [N/mm] | 190,6 | 30,6 | 10,4 | 194,4 | 165,4 | 36,3 |
| **Optics** | **Haze** | [%] | 6,9 | 4,0 | 14,2 | 17,9 | 15,5 | 36,3 |
| **DDI** | **Weight** | [g] | >1200 | 303,0 | 174,0 | >1200 | >1200 | 176,0 |

## Claims

1. A cast film or blown film comprising a composition comprising
a. 80 to 95 wt% of a polypropylene matrix (A) with an MFR₂ of 1 to 30 g/10min being a homopolymer or a copolymer, which has a comonomer content of less than 3 wt%;
b. 5 to 20 wt% of an ethylene-propylene-rubber (EPR) (B) with at least 60 wt% propylene having an intrinsic viscosity (IV) of 1 to 2.5 dl/g; and
c. 0.0001 to 1 wt% of an α-nucleating agent,
wherein the film has a thickness of 5 to 200 µm.

2. A film according to claim 1, wherein the comonomer is ethylene.

3. A film according to claim 1 or 2, wherein at least one α-nucleating agent is selected from the group consisting of sodium benzoate, 1,3:2,4-bis-(3,4-dimethyl-benzylidene)-sorbitol, odium-2,2'-methylenebis-(4,6-di-tert-butyl-phenyl)-phosphate and hydroxybis-(2,4,8,10-tetra-tert-butyl-6-hydroxy-12h-dibenzo-(d, g) (1,3,2)-dioxaphosphocin-6-oxidato)-aluminium, or those based on prepolymerisation of the catalyst with monomers like vinylcyclohexane (VCH).

4. A film according to any one of the preceding claims 1 to 3, wherein the polypropylene matrix has a higher intrinsic viscosity (IV) than the ethylene-propylene-rubber (EPR).

5. A film according to any one of the preceding claims, wherein the polypropylene matrix has an intrinsic viscosity (IV) of 1.8 to 4.0 dl/g;

6. A film according to any one of the preceding claims, wherein the ratio (IV_{EPR}/IVₘₐₜᵣᵢₓ) of the intrinsic viscosity (IV) of the ethylene-propylene rubber (EPR) to the polypropylene matrix is not higher than 0.85.

7. A film according to any one of the preceding claims, wherein the film has C₆-extractables equal or lower than 2.6 wt%.

8. A film according to any one of the preceding claims, wherein the composition has an MFR₂ of at least 2.0 g/10min.

9. A film according to any one of the preceding claims, wherein the film has a tear resistance in the machine direction (W_{MD}) determined by ISO 6383-2 of lower than 20 N/mm when measured on 100 µm thick samples.

10. A film according to any one of the preceding claims, wherein the film has a W_{TD}/W_{MD}-ratio of more than 2, whereby W_{TD} is the tear resistance of the film in the transverse direction determined by ISO 6383-2 when measured on 100 µm thick samples.

11. A film according to any one of the preceding claims, wherein the film has a tear angle (TA) in machine direction equal or less than 2.5° and a tear angle (TA) in transverse direction of less than 4.5° when measured on 100 µm thick samples after having performed a test according to ISO 6383-2.

12. A film according to any one of the preceding claims, wherein the film has a haze of lower than 21 % determined according to ASTM D 1003-92 when measured on 100 µm thick samples.

13. A film according to any one of the preceding claims, wherein the film has a gloss of better than 42 % determined according to ISO 2813 when measured on 100 µm thick samples.

14. Process for producing a cast film according to any one of the preceding claims 1 to 13, comprising the steps of
i) pouring or spreading a solution, hot-melt or dispersion of a material onto a temporary carrier
ii) hardening the material, and
iii) stripping the hardened film from the surface of the carrier whereby the material is a composition comprising
a. 80 to 95 wt% of a polypropylene matrix with an MFR₂ of 1 to 30 g/10min being a homopolymer or a copolymer, which has a comonomer content of less than 3 wt%;
b. 5 to 20 wt% of an ethylene-propylene-rubber (EPR) with at least 60 wt% propylene having an intrinsic viscosity (IV) of 1 to 2.5 dl/g; and
c. 0.0001 to 1 wt% of an α-nucleating agent.

15. Process for producing a blown film according to any one of the preceding claims 1 to 13, comprising the steps of
(i) blowing up a tube of molten material with air perpendicularly to the upwards direction from a side-fed blown film die;
(ii) cooling it down with air from the outside on a cooling ring;
(ii) folding it and guiding it over deflector rolls onto the winder, wherein the material is a composition comprising
a. 80 to 95 wt% of a polypropylene matrix with an MFR₂ of 1 to 30 g/10min being a homopolymer or a copolymer, which has a comonomer content of less than 3 wt%;
b. 5 to 20 wt% of an ethylene-propylene-rubber (EPR) with at least 60 wt% propylene having an intrinsic viscosity (IV) of 1 to 2.5 dl/g; and
c. 0.0001 to 1 wt% of an α-nucleating agent.

16. Process according to claim 14 or 15, wherein the composition is further defined by any one of the claims 2 to 8.

17. Use of a composition for producing a cast film or blown film with a thickness of 5 to 200 µm,
wherein the composition comprises
a. 80 to 95 wt% of a polypropylene matrix with an MFR₂ of 1 to 30 g/10min being a homopolymer or a copolymer, which has a comonomer content of less than 3 wt%;
b. 5 to 20 wt% of an ethylene-propylene-rubber (EPR) with at least 60 wt% propylene having an intrinsic viscosity (IV) of 1 to 2.5 dl/g; and
c. 0.0001 to 1 wt% of an α-nucleating agent.

18. Use according to claim 17, wherein the composition is further defined by any one of the claims 2 to 8.

19. Use of the film according to any one of the claims 1 to 13 as a pouch.

## Patentansprüche

1. Gießfolie oder Blasfolie, die eine Zusammensetzung umfaßt, die folgendes aufweist:
a. 80 bis 95 Gew.-% einer Polypropylen-Matrix (A) mit einer MFR₂ von 1 bis 30 g/10 min, die ein Homopolymer oder ein Copolymer ist, das einen Comonomergehalt von weniger als 3 Gew.-% aufweist;
b. 5 bis 20 Gew.-% eines Ethylen-Propylen-Kautschuks (EPR) (B) mit mindestens 60 Gew.-% Propylen mit einer Strukturviskosität (IV) von 1 bis 2,5 dl/g; und
c. 0,0001 bis 1 Gew.-% eines α-Keimbildners,
wobei die Folie eine Dicke von 5 bis 200 µm hat.

2. Folie nach Anspruch 1, wobei das Comonomer Ethylen ist.

3. Folie nach Anspruch 1 oder 2, wobei zumindest ein α-Keimbildner aus der Gruppe ausgewählt ist, bestehend aus Natriumbenzoat, 1,3:2,4-Bis-(3,4-dimethylbenzyliden)-sorbitol, Natrium-2,2'-methylenbis-(4,6-di-tert.-butylphenyl)-phosphat und Hydroxybis-(2,4,8,10-tetra-tert.-butyl-6-hydroxy-12h-dibenzo-(d,g)(1,3,2-dioxaphosphocin-6-oxidato)-aluminium oder jenen, die auf der Vorpolymerisation des Katalysators mit Monomeren, wie Vinylcyclohexan (VCH), basieren.

4. Folie nach einem der vorstehenden Ansprüche 1 bis 3, wobei die Polypropylen-Matrix eine höhere Strukturviskosität (IV) als der Ethylen-Propylen-Kautschuk (EPR) hat.

5. Folie nach einem der vorstehenden Ansprüche, wobei die Polypropylen-Matrix eine Strukturviskosität (IV) von 1,8 bis 4,0 dl/g hat.

6. Folie nach einem der vorstehenden Ansprüche, wobei das Verhältnis (IV_{EPR}/IV_{Matrix}) zwischen der Strukturviskosität (IV) des Ethylen-Propylen-Kautschuks (EPR) und der der Polypropylen-Matrix nicht höher als 0,85 ist.

7. Folie nach einem der vorstehenden Ansprüche, wobei die Folie mit C₆ herauslösbare Bestandteile von 2,6 Gew.-% oder weniger aufweist.

8. Folie nach einem der vorstehenden Ansprüche, wobei die Zusammensetzung eine MFR₂ von mindestens 2,0 g/10 min hat.

9. Folie nach einem der vorstehenden Ansprüche, wobei die Folie eine Reißfestigkeit in Maschinenrichtung (W_{MD}), gemäß ISO 6383-2 bestimmt, von weniger als 20 N/mm hat, wenn die Messung bei 100 µm dicken Proben erfolgt.

10. Folie nach einem der vorstehenden Ansprüche, wobei die Folie ein W_{TD}/W_{MD}-Verhältnis von mehr als 2 hat, wobei W_{TD} die Reißfestigkeit der Folie in Querrichtung ist, die gemäß ISO 6383-2 bestimmt wird, wenn die Messung bei 100 µm dicken Proben erfolgt.

11. Folie nach einem der vorstehenden Ansprüche, wobei die Folie einen Reißwinkel (TA) in Maschinenrichtung von gleich oder kleiner als 2,5° und einen Reißwinkel (TA) in Querrichtung von weniger als 4,5° hat, wenn die Messung bei 100 µm dicken Proben erfolgt, nachdem ein Test gemäß ISO 6383-2 durchgeführt worden ist.

12. Folie nach einem der vorstehenden Ansprüche, wobei die Folie eine Trübung von weniger als 21 % hat, die gemäß ASTM D 1003-92 bestimmt wird, wenn die Messung bei 100 µm dicken Proben erfolgt.

13. Folie nach einem der vorstehenden Ansprüche, wobei die Folie einen Glanz von mehr als 42 % hat, der gemäß ISO 2813 bestimmt wird, wenn die Messung bei 100 µm dicken Proben erfolgt.

14. Verfahren zur Herstellung einer Gießfolie nach einem der vorstehenden Ansprüche 1 bis 13, welches die Schritte umfaßt:
i) Gießen oder Verteilen einer Lösung, heißen Schmelze oder Dispersion eines Materials auf einen temporären Träger
ii) Härten des Materials und
iii) Abstreifen der gehärteten Folie von der Oberfläche des Trägers,
wobei das Material eine Zusammensetzung ist, welche umfaßt:
a. 80 bis 95 Gew.-% einer Polypropylen-Matrix mit einer MFR₂ von 1 bis 30 g/10 min, die ein Homopolymer oder ein Copolymer ist, das einen Comonomergehalt von weniger als 3 Gew.-% aufweist;
b. 5 bis 20 Gew.-% eines Ethylen-Propylen-Kautschuks (EPR) mit mindestens 60 Gew.-% Propylen mit einer Strukturviskosität (IV) von 1 bis 2,5 dl/g; und
c. 0,0001 bis 1 Gew.-% eines α-Keimbildners.

15. Verfahren zur Herstellung einer Blasfolie nach einem der vorstehenden Ansprüche 1 bis 13, welches die Schritte umfaßt:
i) Aufblasen eines Schlauchs des geschmolzenen Materials mit Luft senkrecht zur Aufwärtsrichtung von einer Blasfoliendüse mit seitlicher Zuführung;
ii) dessen Abkühlen mit Luft von außen auf einem Kühlring;
iii) dessen Falten und Führen über Ablenkrollen auf die Aufwickelvorrichtung,
wobei das Material eine Zusammensetzung ist, welche umfaßt:
a. 80 bis 95 Gew.-% einer Polypropylen-Matrix mit einer MFR₂ von 1 bis 30 g/10 min, die ein Homopolymer oder ein Copolymer ist, das einen Comonomergehalt von weniger als 3 Gew.-% aufweist;
b. 5 bis 20 Gew.-% eines Ethylen-Propylen-Kautschuks (EPR) mit mindestens 60 Gew.-% Propylen mit einer Strukturviskosität (IV) von 1 bis 2,5 dl/g; und
c. 0,0001 bis 1 Gew.-% eines α-Keimbildners.

16. Verfahren nach Anspruch 14 oder 15, wobei die Zusammensetzung ferner wie in einem der Ansprüche 2 bis 8 definiert ist.

17. Verwendung einer Zusammensetzung für die Herstellung einer Gießfolie oder Blasfolie mit einer Dicke von 5 bis 200 µm, wobei die Zusammensetzung umfaßt:
a. 80 bis 95 Gew.-% einer Polypropylen-Matrix mit einer MFR₂ von 1 bis 30 g/10 min, die ein Homopolymer oder ein Copolymer ist, das einen Comonomergehalt von weniger als 3 Gew. -% aufweist;
b. 5 bis 20 Gew.-% eines Ethylen-Propylen-Kautschuks (EPR) mit mindestens 60 Gew.-% Propylen mit einer Strukturviskosität (IV) von 1 bis 2,5 dl/g; und
c. 0,0001 bis 1 Gew.-% eines α-Keimbildners.

18. Verwendung nach Anspruch 17, wobei die Zusammensetzung ferner wie in einem der Ansprüche 2 bis 8 definiert ist.

19. Verwendung der Folie nach einem der Ansprüche 1 bis 13 als Beutel.

## Revendications

1. Feuille coulée ou feuille soufflée comportant une composition comprenant :
a. de 80 à 95 % en poids d'une matrice polypropylène (A) ayant un MFR₂ de 1 à 30 g/10 min étant un homopolymère ou un copolymère, qui possède une teneur en comonomère inférieure à 3 % en poids ;
b. de 5 à 20 % en poids d'un caoutchouc éthylène-propylène (EPR) (B) dont au moins 60 % en poids de propylène présente une viscosité intrinsèque (IV) de 1 à 2,5 dl/g ; et
c. de 0,0001 à 1 % en poids d'un agent de α-nucléation, où la feuille a une épaisseur de 5 à 200 µm.

2. Feuille selon la revendication 1, **caractérisée en ce que** le comonomère est l'éthylène.

3. Feuille selon la revendication 1 ou 2, **caractérisée en ce qu'**au moins un agent de α-nucléation est choisi dans le groupe constitué par le benzoate de sodium, le 1,3:2,4-bis-(3,4-diméthylbenzylidène)-sorbitol, le 2,2'-méthylènebis-(4,6-di-tert-butyl-phényl)-phosphate de sodium et l'hydroxybis-(2,4,8,10-tetra-tert-butyl-6-hydroxy-12h-dibenzo-(d,g) (1,3,2)-dioxaphosphocin-6-oxidato)-aluminium, ou ceux basés sur une prépolymérisation du catalyseur avec des monomères tels que le vinylcyclohexane (VCH).

4. Feuille selon l'une quelconque des revendications précédentes 1 à 3, **caractérisée en ce que** la matrice polypropylène possède une viscosité intrinsèque (IV) supérieure à celle du caoutchouc éthylène-propylène (EPR).

5. Feuille selon l'une quelconque des revendications précédentes, **caractérisée en ce que** la matrice polypropylène possède une viscosité intrinsèque (IV) de 1,8 à 4,0 dl/g.

6. Feuille selon l'une quelconque des revendications précédentes, **caractérisée en ce que** le rapport (IV_{EPR}/IV_{matrice}) de la viscosité intrinsèque (IV) du caoutchouc éthylène-propylène (EPR) à la matrice polypropylène n'est pas supérieure à 0,85.

7. Feuille selon l'une quelconque des revendications précédentes, **caractérisée en ce que** la feuille possède des extractibles en C₆ égaux ou inférieurs à 2,6 % en poids.

8. Feuille selon l'une quelconque des revendications précédentes, **caractérisée en ce que** la composition présente un MFR₂ d'au moins 2,0 g/10 min.

9. Feuille selon l'une quelconque des revendications précédentes, **caractérisée en ce que** la feuille possède une résistance au déchirement dans la direction machine (W_{MD}) déterminée par ISO 6383-2 inférieure à 20 N/mm lorsqu'elle est mesurée sur des échantillons de 100 µm d'épaisseur.

10. Feuille selon l'une quelconque des revendications précédentes, **caractérisée en ce que** la feuille possède un rapport W_{TD}/W_{MD} supérieur à 2, où W_{TD} est la résistance au déchirement de la feuille dans la direction transversale déterminée par ISO 6383-2 lorsqu'elle est mesurée sur des échantillons d'une épaisseur de 100 µm.

11. Feuille selon l'une quelconque des revendications précédentes, **caractérisée en ce que** la feuille présente un angle de déchirement (TA) dans la direction machine égal ou inférieur à 2,5° et un angle de déchirement (TA) dans la direction transversale inférieur à 4,5° lorsqu'il est mesuré sur des échantillons de 100 µm d'épaisseur d'après un test réalisé selon ISO 6383-2.

12. Feuille selon l'une quelconque des revendications précédentes, **caractérisée en ce que** la feuille présente un obscurcissement inférieur à 21 % déterminé selon ASTM D 1003-92 lorsqu'il est mesuré sur des échantillons de 100 µm d'épaisseur.

13. Feuille selon l'une quelconque des revendications précédentes, **caractérisée en ce que** la feuille possède un brillant supérieur à 42 % déterminé selon ISO 2813 lorsqu'il est mesuré sur des échantillons de 100 µm d'épaisseur.

14. Procédé de fabrication d'une feuille coulée selon l'une quelconque des revendications précédentes 1 à 13, comprenant les étapes consistant à
(i) verser ou répandre une solution, une coulée à chaud ou une dispersion d'un matériau sur un support temporaire
(ii) durcir le matériau, et
(iii) démouler la feuille durcie de la surface du support, le matériau étant une composition comprenant
a. de 80 à 95 % en poids d'une matrice polypropylène ayant un MFR₂ de 1 à 30 g/10 min étant un homopolymère ou un copolymère, qui possède une teneur en comonomère inférieure à 3 % en poids ;
b. de 5 à 20 % en poids d'un caoutchouc éthylène-propylène (EPR) dont au moins 60 % en poids de propylène présente une viscosité intrinsèque (IV) de 1 à 2,5 dl/g ; et
c. de 0,0001 à 1 % en poids d'un agent de α-nucléation.

15. Procédé de fabrication d'une feuille soufflée selon l'une quelconque des revendications précédentes 1 à 13, comprenant les étapes consistant à
(i) gonfler un tube de matériau en fusion avec de l'air perpendiculairement à la direction verticale à partir d'un moule alimenté latéralement par la feuille soufflée ;
(ii) la refroidir avec de l'air provenant de l'extérieur d'un anneau de refroidissement ;
(iii) la replier et la guider au-dessus de rouleaux déflecteurs sur l'enrouleur, le matériau étant une composition comprenant
a. de 80 à 95 % en poids d'une matrice polypropylène ayant un MFR₂ de 1 à 30g/10 min étant un homopolymère ou un copolymère, qui possède une teneur en comonomère inférieure à 3 % en poids ;
b. de 5 à 20 % en poids d'un caoutchouc éthylène-propylène (EPR) dont au moins 60 % en poids de propylène présente une viscosité intrinsèque (IV) de 1 à 2,5 dl/g ; et
c. de 0,0001 à 1 % en poids d'un agent de α-nucléation.

16. Procédé selon la revendication 14 ou 15, **caractérisé en ce que** la composition est en outre définie par l'une quelconque des revendications 2 à 8.

17. Utilisation d'une composition pour la fabrication d'une feuille coulée ou d'une feuille soufflée ayant une épaisseur de 5 à 200 µm, **caractérisée en ce que** la composition comprend :
a. de 80 à 95 % en poids d'une matrice polypropylène ayant un MFR₂ de 1 à 30 g/10 min étant un homopolymère ou un copolymère, qui possède une teneur en comonomère inférieure à 3 % en poids ;
b. de 5 à 20 % en poids d'un caoutchouc éthylène-propylène (EPR) dont au moins 60 % en poids de propylène présente une viscosité intrinsèque (IV) de 1 à 2,5 dl/g ; et
c. de 0,0001 à 1 % en poids d'un agent de α-nucléation.

18. Utilisation selon la revendication 17, **caractérisée en ce que** la composition est en outre définie par l'une quelconque des revendications 2 à 8.

19. Utilisation d'une feuille selon l'une quelconque des revendications 1 à 13 en tant que poche.
